# EUROPEAN PATENT SPECIFICATION

(11) **EP 1 476 318 B1**
(45) Date of publication and mention of the grant of the patent: **25.09.2013**
(21) Application number: 02709309.5
(22) Date of filing: 01.02.2002
(51) Int. Cl.: G01C 15/00, G01C 15/12

(54) **APPARATUS FOR PRODUCING A VISIBLE LINE OF LIGHT ON A SURFACE**
VORRICHTUNG ZUR ERZEUGUNG EINER SICHTBAREN LICHTLINIE AUF EINER FLÄCHE
APPAREIL DE PRODUCTION D'UNE LIGNE LUMINEUSE VISIBLE SUR UNE SURFACE

(43) Date of publication of application: 17.11.2004
(73) Proprietor: Trimble Navigation Limited, Sunnyvale, CA 94085 (US)
(72) Inventor: GOODRICH, Gary, Union City, CA 94587 (US); LEMER, Larry, Marietta, GA 30068 (US)
(74) Representative: Meyer, Ludgerus
(86) International application number: PCT/US2002/003151
(87) International publication number: WO 2003/066349

(56) References cited:
- US-A- 5 539 990
- US-A- 5 754 582
- US-A- 6 163 969
- US-B1- 6 195 902
- US-B1- 6 195 902
- US-B1- 6 202 312
- US-B1- 6 202 312

## Description

### Background of the Invention

This invention relates to hand tools, and in particular the invention is concerned with a hand tool for projecting a reference beam of visible light for precise alignment on floors and walls.

For some time laser beams have been used in construction for level references, vertical references and layout on floors and walls. Typically a construction worker marks the floor or walls indicating the location of walls, windows, or other building elements to be constructed. A chalk line is often used to permanently mark the walls or floors. This is a two man job with one man holding one end of the chalked string while the other snaps it, releasing chalk dust which makes the mark.

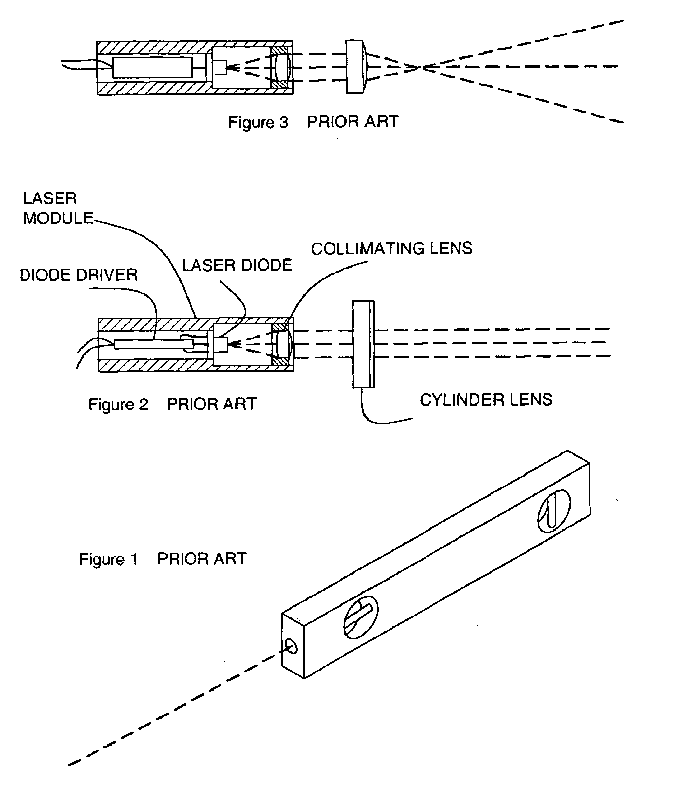

The most common prior laser device is a simple carpenter's level with level vials and with a laser beam projector attached. See Figure 1. Many thousands of these are in use today. U.S. patents in this area include Genho 4,221,483, Rando 6,009,630 and others. Although indicating level, these levels do a poor job of projecting a beam on a floor or wall. LeveLite Technology, Inc., the assignee of this invention, makes a product for producing two beams of visible light on the floor for the purpose of laying out a 90° corner. It is described in U.S. patent. US 6202312. This instrument uses a collimated beam of light and an adjustable cylinder lens to convert the round beam into a fan of light and thus project a line on the surface. This is not a very efficient use of the laser diode light because of the natural divergence of the diode and cropping of the beam in collimation. Typically the laser diode beam divergence is 30° in one axis and 8° on the transverse axis. About half the light is lost in the collimation process. In addition, the line can be focused for only one distance. Such an optical system is shown in plan view in Figure 2 herein and in side view in Figure 3 herein, and is the present state of the art. Both the problems of efficient use of the laser light and focusing continuously along a line are solved by the current invention.

### Summary of the Invention

This invention allows the user to project a highly visible line on a surface. In addition it allows the line to be adjusted to true vertical or horizontal with the aid of a level vial when used on a vertical surface, e.g. a wall. An attachment to a stud-finder instrument is further provided as an example. In some cases a magnet can facilitate holding the unit to metal studs.

The simple, efficient optical system is the important feature of this invention. The instrument provides a highly visible line which can temporarily act as a chalk line for the purpose of marking points along the line, when requiring a more permanent mark, or for operations along the line with the laser line in place. These and other objects, advantages and features of the invention will be apparent from the following description of a preferred embodiment, considered along with the accompanying drawings.

### Description of the Drawings

Fig. 1 is a perspective view showing a prior art carpenter's level with projected laser beam.
Figs. 2 and 3 are elevation and plan views showing a prior art laser line projector schematically using a cylinder lens.
Figs. 4 and 5 are elevation and plan views illustrating the principle of line projection according to the invention.
Figs. 6 and 7 are elevation and plan views similar to Figs. 4 and 5 but showing a different embodiment.
Fig. 8 is a schematic perspective view showing a laser instrument projecting a line on a surface in accordance with the principles of the invention.
Fig. 9 is a sectional elevation view schematically showing the instrument of Fig. 8, with some elements omitted for clarity.
Figs. 10 and 11 are perspective views illustrating use of the instrument on a wall, to project a line which may be horizontal or vertical on the wall surface.
Fig. 12 is a perspective view showing the instrument used along with a stud finder, to project a vertical line indicating location of an entire stud.
Figs. 13, 14 and 15 are schematic side views showing the components of the invention projecting a line on a surface and showing three different methods for utilizing the entire wide angle of the diverging beam along the long axis.
Figs. 16 and 17 are schematic side views showing another form of the invention using cylindrical concave mirrors for focus in the narrow angle of the beam.

### Description of Preferred Embodiments

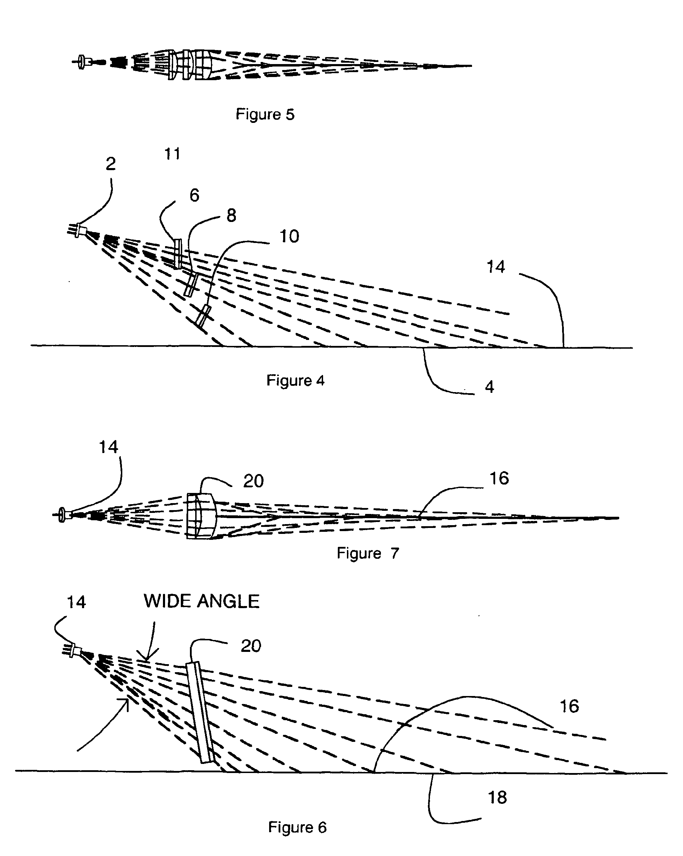

An optical system is shown in Figures 4 and 5. A laser diode 2 is positioned above a surface 4 to be marked, with the wide divergence angle of the laser, i.e. the major or long axis, perpendicular to the surface. In other words, a plane which is longitudinal relative to the laser diode and which includes the long axis of the beam is perpendicular to the surface. Cylinder lenses 6, 8, 10 project a beam 11 from the laser diode 2 onto a continuous line 14. The widths of the lenses are chosen to collect all the light from the narrow divergence angle (short axis) of the diode, substantially without cropping. The use of a plurality of lenses in the direction of the wide divergence (long axis) allows most of the light to be collected making the system efficient. The ability of each lens to be adjusted for a particular distance to produce a fine line is superior to the prior art; focus adjustment for distance can be done either by use of different focal length lenses or by adjustment of distance from the diode to each lens. The figures show how substantially all of the laser power in the wide and narrow divergence angles of the diode is projected into a tapering fan and into a line on a surface.

Another preferred embodiment of the optical system is shown in two views in Figs. 6 and 7. A laser diode 14 projects a line 16 on a surface 18 using a single cylinder lens 20. The lens is tipped to provide the best focus for the entire surface by varying continuously the distance between the lens and the diode along the wide angle or long axis of the diode's beam. This provides variation for best focus on the line 16 on the surface. The diode is located preferably about 25mm to 125mm above (or away from) the surface to provide the angle needed to distribute the light along the floor (or other surface on which the device is used).

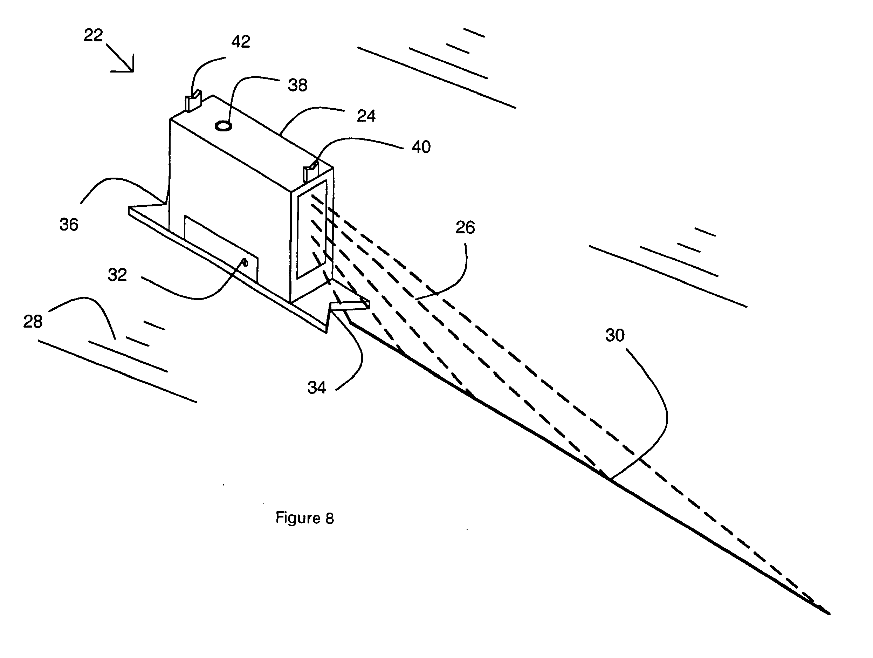

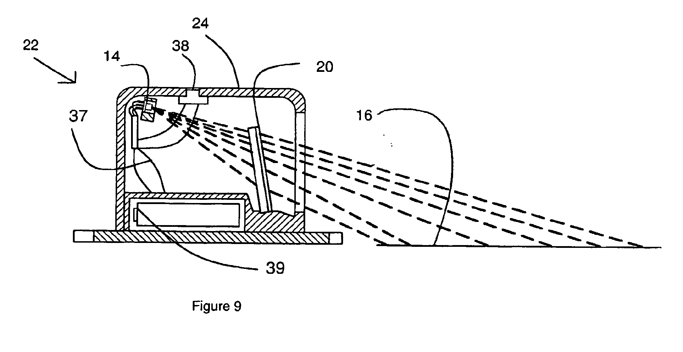

A preferred embodiment of an instrument is indicated generally by 22 in Figure 8. A housing 24 contains the projection system described above. A fan-shaped beam 26 is projected onto a surface 28 to form a line 30. The housing has a battery door 32 and marking notches 34 and 36 which are in the same plane as the projected beam 26 and are used for positioning the line 30 and the instrument on marks on the floor during layout. An on-off switch 38 and sights 40 and 42 are in the plane of the beam 26 and may be used for sighting the instrument for desired alignment. Details of the internal construction of the instrument 22 are shown in Fig. 9. A battery 39 and wires 37 are included.

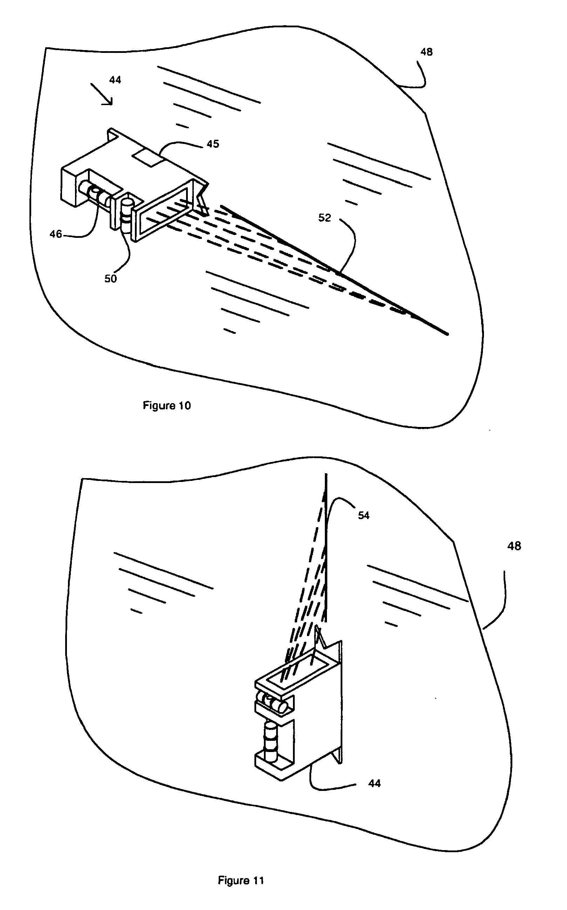

A slightly modified instrument 44 shown in Fig. 10 is the same as 22 except for the addition of a horizontal indicating level vial 46. A magnet 45 is provided to hold the instrument to a steel stud as may be necessary from time to time. The sights and switch of Figs. 8 and 9 have been removed for clarity in Fig. 10. The unit is positioned on a vertical wall 48. A second level vial 50 for indicating vertical is also mounted to the line projector. In this figure a horizontal line 52 is projected on the wall.

Figure 11 shows the instrument of Fig. 10 positioned on the vertical wall projecting a vertical line 54 on the wall 48.

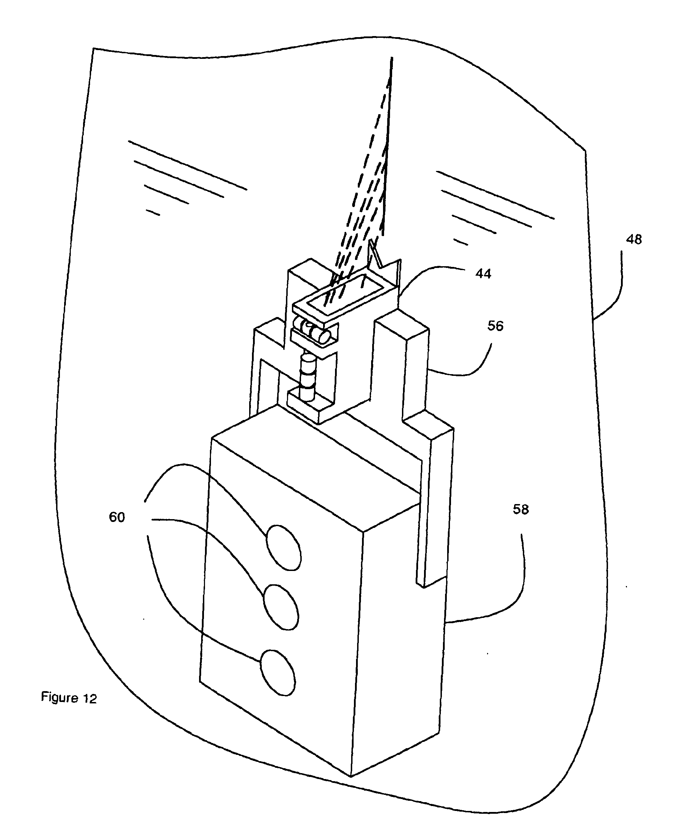

Figure 12 shows an example of the instrument 44 of Figs. 10 and 11 on the vertical wall 48 with a bracket 56 attached to the instrument. The bracket holds a stud-finder 58 which indicates the location of a stud behind a wall with its indicator lights 60. Using this combination instrument one location of the stud may be used to locate the entire length of a vertical stud. This eliminates the need to find the stud at several locations up and down the wall.

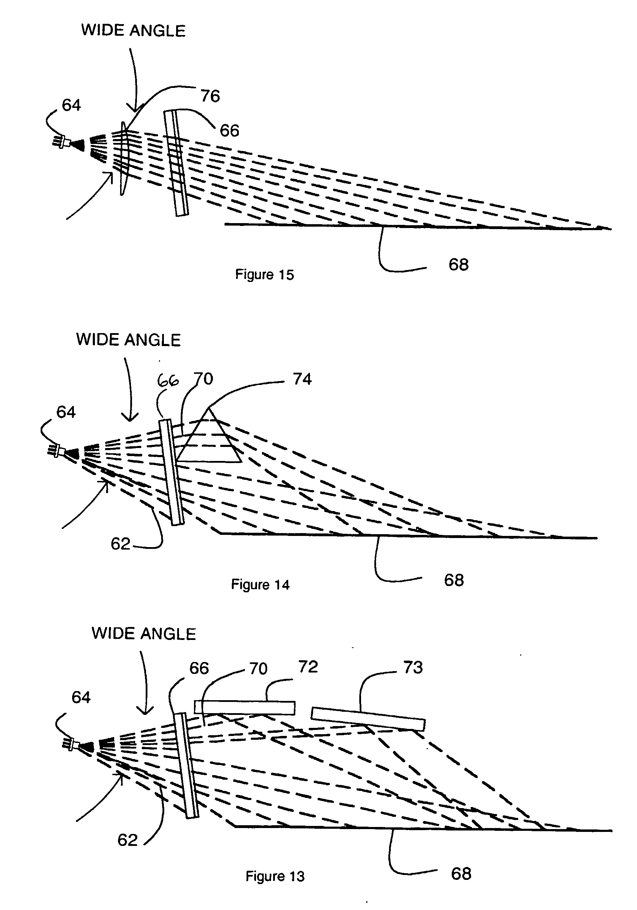

In another preferred embodiment the light in the wide angle divergence or long axis direction of the diode is used efficiently by employing one or more mirrors to reflect part of the light back onto the line as shown in Fig. 13. A laser diode 64 directs a beam of light 62 to a cylinder lens 66 to form a line 68. A portion of the light 70 exiting the lens 66 strikes mirrors 72 and 73 and is directed onto the line 68 increasing its brightness, at the distant portion of the line where the line is weakest. A prism 74 can also be used to redirect the portion 70 back onto the line 68 as shown in Fig. 14. Fig. 15 shows that a positive cylinder lens 76, oriented transversely to the cylinder lens 66, can be used to narrow the divergence of the diode laser beam as it reaches the cylinder lens 66 to efficiently use the power from the laser diode in this preferred embodiment. Instead of two separate cylinder lenses 66 and 76, a hybrid lens could be fashioned to accomplish both functions.

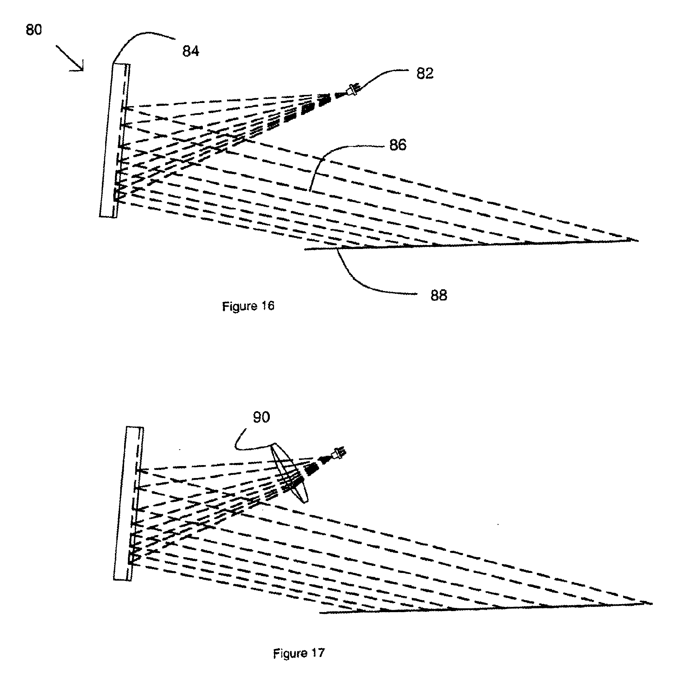

In another preferred embodiment the light beam is focused in the narrow angle of divergence with a cylindrical mirror instead of a cylinder lens, achieving similar beam distribution and focus. Figure 16 shows the projector 80 comprising a laser diode 82 and cylindrical reflecting surface 84 projecting the beam, diverging in its wide angle as shown, from the laser diode into a fan of line 88 on a surface. The back-reflection arrangement shown allows the beam conveying element 84 to be placed at a proper angle of tilt to achieve optimum focus along the length of the line 88, as shown with the lens in Figs. 6 and 13-15. The beam divergence in the wide angle can be further controlled by a lens 90 shown in Fig. 17 which otherwise contains the same elements of Fig. 16. It is also possible to include the optical power of the lens 90 in the mirror 84, by providing a mirror which curves concavely in the transverse direction, i.e. appearing arcuate and concave in side view, rather than linear as in Figs. 16 and 17. This becomes an expensive optical element but is theoretically possible. In addition, the focus correction for a range of distance, as achieved by the tilted conveying element, could be realized using a concave cylinder reflecting surface that varies in radius of concavity along its length, to provide varying focal length for this narrow angle of divergence.

The above described preferred embodiments are intended to illustrate the principles of the invention, but not to limit its scope. Other embodiments and variations to this preferred embodiment will be apparent to those skilled in the art and may be made without departing from the invention as defined in the following claims.

## Claims

1. A method for producing a line of laser light on a surface (4), comprising:
positioning a laser diode (2), of the type that produces an oblong beam (11) diverging unequally in wide and narrow angles of divergence along two perpendicular axes, a long axis and a short axis, at a position spaced away from a surface on which a reference line (14) is to be projected, and
focusing the laser beam (11) to converge the beam in the narrow angle of divergence on said short axis, to bring the beam into approximate focus along a line on said surface,
whereby the wide angle of divergence of the laser diode's beam (11) in the long axis is used to generate a line on the surface, in a simple and efficient optical system
wherein the step of positioning the laser diode includes tilting the aim of the laser diode (2) obliquely downwardly toward the surface and
wherein the focusing step comprises placing a cylinder lens (6, 8, 10) in the path of the laser diode's beam and tilting the cylinder lens (6, 8, 10) so as to be closer to the laser diode at a lens end more distant from the surface (4), and farther from the laser diode (2) at an opposite lens end closer to the surface (2), the lens orientation being such as to maximize the focus of the laser beam (11) along the line, in portions of the line both near the laser diode (2) and distant from the laser diode (2).

2. A laser instrument for producing a line on a surface, comprising:
a housing (24) having a base side and having an exit window for a laser beam,
a laser diode (14) in the housing producing an oblong beam which diverges unequally in wide and narrow angles of divergence along two perpendicular axes, a long axis and a short axis, and the diode being oriented such that a longitudinal plane through the diode that includes the long axis of the beam is perpendicular to the housing base, and
optical means for converging the laser beam in its narrow angle, on the short axis, while allowing the beam to continue diverging on the long axis, to substantially focus the beam to a narrow line of light, the line being in front of the housing and substantially in said longitudinal plane, and extending away from the base of the housing
wherein the optical means comprises a cylinder lens (20) in the housing, in the path of the laser diode's beam, the cylinder lens being tilted so as to be closer to the diode at a lens end more distant from the surface, and farther from the diode at an opposite lens end closer to the surface, the tilt being such as to maximize the focus of the laser beam along the line, in portions both near to and remote from the instrument.

3. The instrument of claim 2, wherein the optical means includes a series of cylinder lenses(6, 8, 10) at serial positions along said long axis of the laser diode's beam, each of the cylinder lenses being configured to focus a different portion of the beam to a different distance to form a part of the line of light.

4. The instrument of claim 2, wherein the housing's base side additionally includes at least one reference marking notch lying within said longitudinal plane.

5. The instrument of claim 2, further including a pair of alignment sights on the housing, the alignment sights being spaced apart and lying within said longitudinal plane.

6. The instrument of claim 2, further including a horizontal-indicating level vial secured to the housing and positioned so as to permit leveling the line of light when the instrument is used with its base side essentially in a vertical plane, flat against a substantially vertical surface.

7. The instrument of claim 2, further including a vertical-indicating level vial, oriented so as to allow adjustment of the instrument to produce a vertical line of light when the instrument is used with its base side flat against a substantially vertical surface.

8. The instrument of claim 2, the laser diode in the housing being aimed obliquely toward a base plane in which the base side of the instrument lies, and being so oriented that portions of the beam most remote from said plane are diverging away from the base plane, and including a mirror positioned to reflect such diverging portions toward the base plane to enhance the brightness of the line of light.

9. The instrument of claim 2, the laser diode in the housing being aimed obliquely toward a base plane in which the base side of the instrument lies, and being so oriented that portions of the beam most remote from said plane are diverging away from the base plane, and including a prism positioned to redirect such diverging portions of the beam toward the base plane to enhance the brightness of the line of light.

10. The instrument of claim 2, further including a positive lens placed in the path of the beam so as to reduce the wide angle of divergence of the beam, such that the beam continues to diverge at a lesser angle along the long axis, whereby the beam can be used to project the line of light at a low angle to the surface without wasting portions of the beam which would otherwise be directed away from the surface.

## Patentansprüche

1. Verfahren zum Erzeugen einer Laserlichtlinie auf einer Oberfläche (4), das Folgendes umfasst:
Positionieren einer Laserdiode (2) des Typs, der einen Längsstrahl (11) erzeugt, der in breiten und schmalen Divergenzwinkeln entlang zweier senkrecht zueinander verlaufender Achsen, einer langen und einer kurzen Achse, unterschiedlich divergiert, an einer Position, die von einer Oberfläche, auf die eine Referenzlinie (14) projiziert werden soll, beabstandet ist, und
Fokussieren des Laserstrahls (11), um den Strahl in dem schmalen Divergenzwinkel auf der kurzen Achse zu konvergieren, um den Strahl entlang einer Linie auf der Oberfläche in einen angenäherten Fokus zu bringen,
wobei der breite Divergenzwinkel des Laserdiodenstrahls (11) in der langen Achse in einem einfachen und effizienten optischen System zur Erzeugung einer Linie auf der Oberfläche verwendet wird,
wobei der Schritt des Positionierens der Laserdiode das Neigen des Ziels der Laserdiode (2) schräg abwärts in Richtung auf die Oberfläche umfasst und
wobei der Schritt des Fokussierens das Anordnen einer Zylinderlinse (6, 8, 10) in dem Pfad des Laserdiodenstrahls und das Neigen der Zylinderlinse (6, 8, 10) umfasst, so dass diese einem weiter von der Oberfläche (4) entfernten Linsenende näher liegt, und weiter weg von der Laserdiode (2) an dem gegenüberliegenden Linsenende, das näher zur Oberfläche (2) liegt, wobei die Linsenorientierung so ausgebildet ist, dass sie den Fokus des Laserstrahls (11) entlang der Linie, in Bereichen der Linie sowohl nahe der Laserdiode (2) als auch im Abstand zur Laserdiode (2) maximiert.

2. Laserinstrument zum Erzeugen einer Linie auf einer Oberfläche, das Folgendes umfasst:
ein Gehäuse (24), das eine Bodenseite und ein Austrittsfenster für einen Laserstrahl aufweist,
eine in dem Gehäuse angeordnete Laserdiode (14), die einen Längsstrahl erzeugt, der in breiten und schmalen Divergenzwinkeln entlang zweier senkrecht zueinander verlaufender Achsen, einer langen und einer kurzen Achse, unterschiedlich divergiert, und wobei die Diode so ausgerichtet ist, dass eine Längsebene durch die Diode verläuft, bei der die lange Achse des Strahls senkrecht zum Gehäuseboden verläuft, und
ein optisches Mittel zum Konvergieren des Laserstrahls in seinem schmalen Winkel, auf der kurzen Achse, während der Strahl weiterhin an der langen Achse divergieren kann, um den Strahl im Wesentlichen auf eine schmale Lichtlinie zu fokussieren, wobei die Linie sich vor dem Gehäuse und im Wesentlichen in der Längsebene befindet, und sich vom Boden des Gehäuses aus erstreckt,
wobei das optische Mittel eine Zylinderlinse (20) in dem Gehäuse im Pfad des Laserdiodenstrahls umfasst, und wobei die Zylinderlinse so geneigt ist, dass sie sich am weiter von der Oberfläche befindlichen Linsenende näher an der Diode zu befindet, und weiter von der Diode an dem gegenüberliegenden Linsenende näher der Oberfläche, wobei die Neigung so gewählt ist, dass der Fokus des Laserstrahls entlang der Linie maximiert wird, und zwar in nahen und von dem Instrument weiter entfernten Abschnitten.

3. Instrument nach Anspruch 2, bei dem das optische Mittel eine Reihe von Zylinderlinsen (6, 8, 10) an seriellen Positionen entlang der langen Achse des Laserdiodenstrahls umfasst, wobei jede der Zylinderlinsen so konfiguriert ist, dass sie einen unterschiedlichen Abschnitt des Strahls in einer unterschiedlichen Entfernung fokussiert, um einen Teil der Lichtlinie zu bilden.

4. Instrument nach Anspruch 2, bei dem die Seite des Gehäusebodens zusätzlich wenigstens eine Referenz-Markierungskerbe aufweist, die innerhalb der Längsebene liegt.

5. Instrument nach Anspruch 2, das weiterhin ein Paar von Ausrichtungsvisieren auf dem Gehäuse umfasst, wobei die Ausrichtungsvisiere voneinander beabstandet sind und innerhalb der Längsebene liegen.

6. Instrument nach Anspruch 2, das weiterhin eine die Horizontale anzeigende ebene Libelle umfasst, die an dem Gehäuse befestigt und so positioniert ist, dass sie das Ausrichten der Lichtlinie ermöglicht, wenn das Instrument so verwendet wird, dass seine Bodenseite sich im Wesentlichen in einer vertikalen Ebene flach an einer im Wesentlichen vertikalen Oberfläche befindet.

7. Instrument nach Anspruch 2, das weiterhin eine die Vertikale anzeigende ebene Libelle umfasst, die so ausgerichtet ist, dass sie das Einstellen des Instruments ermöglicht, um eine vertikale Lichtlinie zu erzeugen, wenn das Instrument so verwendet wird, dass seine Bodenseite flach an einer im Wesentlichen vertikalen Oberfläche anliegt.

8. Instrument nach Anspruch 2, bei dem die Laserdiode in dem Gehäuse schräg in Richtung auf eine Bodenebene ausgerichtet ist, auf der die Bodenseite des Instruments liegt, und so orientiert ist, dass die Abschnitte des Strahls, die von der Ebene am weitesten entfernt sind, von der Bodenebene weg divergieren, und das Instrument weiterhin einen Spiegel umfasst, der so positioniert ist, dass er diese divergierenden Bereiche in Richtung auf die Bodenebene reflektiert, um die Helligkeit der Lichtlinie zu erhöhen.

9. Instrument nach Anspruch 2, bei dem die Laserdiode in dem Gehäuse schräg auf eine Bodenebene gerichtet wird, in der sich die Bodenseite des Instruments befindet, und so orientiert ist, dass die Abschnitte des Strahls, die von der Ebene am weitesten entfernt liegen, von der Bodenebene weg divergieren, und wobei das Instrument weiterhin ein Prisma umfasst, das so positioniert ist, dass es diese divergierenden Teile des Strahls in Richtung auf die Bodenebene ablenkt, um die Helligkeit der Lichtlinie zu erhöhen.

10. Instrument nach Anspruch 2, das weiterhin eine positive Linse umfasst, die im Weg des Strahls positioniert ist, um so den breiten Divergenzwinkel des Strahls zu reduzieren, so dass der Strahl weiterhin entlang der langen Achse um einen geringeren Winkel divergiert, wodurch der Strahl verwendet werden kann, um die Lichtlinie in einem kleinen Winkel zur Oberfläche zu projizieren, ohne Verlust der Abschnitte des Strahls, die ansonsten weg von der Oberfläche gerichtet würden.

## Revendications

1. Procédé pour produire une ligne de lumière laser sur une surface (4), comprenant :
le positionnement d'une diode laser (2), du type qui produit un faisceau oblong (11) divergeant inégalement dans des angles de divergence larges et étroits le long de deux axes perpendiculaires, un axe long et un axe court, à un endroit espacé d'une surface sur laquelle une ligne de référence (14) doit être projetée, et
la focalisation du faisceau laser (11) pour le faire converger dans l'angle de divergence étroit sur l'axe court, afin de le concentrer approximativement le long d'une ligne sur ladite surface,
moyennant quoi l'angle de divergence large du faisceau (11) de la diode laser dans l'axe long est utilisé pour générer une ligne sur la surface, dans un système optique simple et efficace,
étant précisé que l'étape de positionnement de la diode laser comprend l'inclinaison du pointeur de la diode laser (2) en biais vers le bas, en direction de la surface, et
que l'étape de focalisation comprend le placement d'une lentille cylindrique (6, 8, 10) dans la trajectoire du faisceau de la diode laser et l'inclinaison de ladite lentille cylindrique (6, 8, 10) pour qu'elle se trouve plus près de la diode laser à une extrémité de lentille plus éloignée de la surface (4), et plus loin de la diode laser (2) à une extrémité de lentille opposée plus proche de la surface (2), l'orientation de la lentille étant de nature à maximaliser la focalisation du faisceau laser (11) le long de la ligne, dans des parties de la ligne à la fois proches de la diode laser (2) et éloignées de celle-ci.

2. Instrument laser pour produire une ligne sur une surface, comprenant :
un boîtier (24) qui présente un côté de base et une fenêtre de sortie pour un faisceau laser,
une diode laser (14) dans le boîtier, qui produit un faisceau oblong divergeant inégalement dans des angles de divergence larges et étroits le long de deux axes perpendiculaires, un axe long et un axe court, et la diode étant orientée de telle sorte qu'un plan longitudinal la traversant et qui contient l'axe long du faisceau soit perpendiculaire à la base de boîtier, et
des moyens optiques pour faire converger le faisceau laser dans son angle étroit, sur l'axe court, tout en permettant au faisceau de continuer à diverger sur l'axe long, pour focaliser globalement le faisceau sur une étroite ligne de lumière, la lumière se trouvant devant le boîtier et globalement dans ledit plan longitudinal, et s'éloignant de la base du boîtier,
étant précisé que les moyens optiques comprennent une lentille cylindrique (20) dans le boîtier, sur la trajectoire du faisceau de la diode laser, la lentille cylindrique étant inclinée de manière à se trouver plus près de la diode à une extrémité de lentille plus éloignée de la surface, et plus loin de la diode à une extrémité de lentille opposée plus proche de la surface, l'inclinaison étant de nature à maximaliser la focalisation du faisceau laser le long de la ligne, dans des parties à la fois proches et éloignées de l'instrument.

3. Instrument de la revendication 2, étant précisé que les moyens optiques comprennent une série de lentilles cylindriques (6, 8, 10) à des endroits en série le long de l'axe long du faisceau de diode laser, chacune des lentilles cylindriques étant conçue pour focaliser une partie différente du faisceau sur une distance différente, pour former une partie de la ligne de lumière.

4. Instrument de la revendication 2, étant précisé que le côté de base du boîtier comprend en supplément au moins une encoche de marquage de référence qui se trouve à l'intérieur du plan longitudinal.

5. Instrument de la revendication 2, comprenant par ailleurs deux viseurs d'alignement sur le boîtier, les viseurs d'alignement étant espacés et se trouvant à l'intérieur du plan longitudinal.

6. Instrument de la revendication 2, comprenant par ailleurs une fiole de niveau à indication horizontale qui est fixée au boîtier et qui est positionnée de manière à permettre une mise à niveau de la ligne de lumière quand l'instrument est utilisé avec son côté de base essentiellement dans un plan vertical, à plat contre une surface globalement verticale.

7. Instrument de la revendication 2, comprenant par ailleurs une fiole de niveau à indication verticale qui est orientée de manière à permettre un réglage de l'instrument pour produire une ligne verticale de lumière quand l'instrument est utilisé avec son côté de base à plat contre une surface globalement verticale.

8. Instrument de la revendication 2, la diode laser prévue dans le boîtier étant pointée en biais vers un plan de base dans lequel se trouve le côté de base de l'instrument, et étant orientée de telle sorte que les parties du faisceau les plus éloignées dudit plan divergent en s'éloignant du plan de base, et comprenant un miroir qui est positionné pour réfléchir ces parties divergentes vers le plan de base afin d'augmenter la brillance de la ligne de lumière.

9. Instrument de la revendication 2, la diode laser prévue dans le boîtier étant pointée en biais vers un plan de base dans lequel se trouve le côté de base de l'instrument, et étant orientée de telle sorte que les parties du faisceau les plus éloignées dudit plan divergent en s'éloignant du plan de base, et comprenant un prisme qui est positionné pour rediriger ces parties divergentes du faisceau vers le plan de base afin d'augmenter la brillance de la ligne de lumière.

10. Instrument de la revendication 2, comprenant par ailleurs une lentille positive qui est placée sur la trajectoire du faisceau de manière à réduire l'angle de divergence large du faisceau, de sorte que le faisceau continue à diverger suivant un angle plus faible le long de l'axe long, moyennant quoi le faisceau peut être utilisé pour projeter la ligne de lumière suivant un angle faible sur la surface sans perdre de parties du faisceau qui, sinon, seraient dirigées à l'opposé de la surface.
